# EUROPEAN PATENT SPECIFICATION

(11) **EP 4 001 467 B1**
(45) Date of publication and mention of the grant of the patent: **19.03.2025**
(21) Application number: 20207794.7
(22) Date of filing: 16.11.2020
(51) Int. Cl.: C25B 1/04, C25B 9/70, C25B 15/02, C25B 15/08, C25B 15/00

(54) **ELECTROLYSIS ARRANGEMENT**
ELEKTROLYSEANORDNUNG
AGENCEMENT D'ÉLECTROLYSE

(43) Date of publication of application: 25.05.2022
(73) Proprietor: L'Air Liquide, Société Anonyme pour l'Etude et l'Exploitation des Procédés Georges Claude, 75007 Paris (FR)
(72) Inventor: COMBES, Gary, 60439 Frankfurt am Main (DE); BEHR, Alexander, 60439 Frankfurt am Main (DE); BROCHARD, Antoine, 92150 Suresnes (FR)
(74) Representative: Schwenderling, Jens

(56) References cited:
- WO-A1-2014/170337
- WO-A1-98/09001
- US-A1- 2005 121 315
- US-A1- 2019 093 243

## Description

The invention is directed to an electrolysis arrangement.

On an industrial scale, electrolysis is usually performed using stacks of electrolysis cells. Each of the electrolysis cells has an anode and a cathode, between which a voltage is applied. Each of the stacks are equipped with a transformer, a rectifier and further equipment referred to as the balance of stack. Usually, the stacks and the equipment connected thereto are arranged within the same building. Known layouts of electrolysis arrangements require significant space within such a building. This does not only cause significant costs for the building itself. Moreover, a large building requires a significant volume of climate control for maintaining the operating climate. Also, some parts of the electrolysis arrangement have to be placed within an ATEX rated zone because explosive gases are handled. Known layouts have large ATEX rated zones, which further increases costs for extraction.

An example of an electrolysis system is known from US 2019/093243 A1. A further example of an electrolysis system is known from US 2005/0121315 A1.

The object of the invention is to improve the prior art so that an electrolysis arrangement with a more compact layout is obtained.

The object of the present invention is solved with the electrolysis arrangement as defined in claim 1. Advantageous embodiments of the present invention are defined in the dependent claims.
According to the invention an electrolysis arrangement (see claim 1) comprises:
- an enclosure having a primary level with a floor spanned by a first direction and a second direction that is perpendicular to the first direction,
- multiple stacks of electrolysis cells, wherein the stacks are configured to obtain an anode product and a cathode product by electrolysis of a medium, and wherein the stacks are arranged on the primary level of the enclosure,
- at least two transformers and at least two rectifiers configured to provide electrical energy to the stacks, wherein the transformers are arranged on the primary level of the enclosure,
- an anode separator connected to the stacks and configured to separate the anode product from the medium, wherein the anode separator is arranged on a secondary level of the enclosure, wherein the secondary level is elevated with respect to the primary level,
- a cathode separator connected to the stacks and configured to separate the cathode product from the medium, wherein the cathode separator is arranged on the secondary level of the enclosure, and
- a pump unit for driving the medium, wherein the pump unit is arranged on the primary level of the enclosure,
wherein the enclosure comprises three sections that are arranged next to each other along the first direction, wherein at least one of the stacks and at least one of the transformers are arranged within a first of the sections, wherein the pump unit, the anode separator and the cathode separator are arranged within a second of the sections, and wherein at least one of the stacks and at least one of the transformers are arranged within a third of the sections.

The electrolysis arrangement can be used for electrolysis of a medium. Preferably, the medium is liquid, in particular water. The medium may contain dissolved salts such as KOH for alkaline electrolysis or electrolysis using anion exchange membrane cells. The electrolysis products are preferably gaseous. In the case of water, hydrogen and oxygen can be obtained as the electrolysis products. The electrolysis arrangement is intended to be used for an industrial scale electrolysis. For example, it is preferred that at least one of the electrolysis products is obtained at a rate of 250 to 1500 Nm³ per hour per stack. This applies, in particular, to the production of hydrogen in the case of water electrolysis. The electrolysis is preferably performed in an automated way.

The electrolysis arrangement comprises multiple stacks. Preferably, the electrolysis arrangement comprises 2 to 16 stacks, in particular 2, 4 or 8 stacks. The stacks can also be referred to as electrolysis stacks. Within the stack the electrolysis of the medium can be performed using the electrolysis cells. Thereby, an anode product and a cathode product are obtained. In the case of water as the medium the anode product is oxygen and the cathode product is hydrogen. The anode product and the cathode product can be extracted from the stack. Thereby, however, the products will be mixed with the medium.

Preferably, the stacks each have a maximum rated DC power consumption in the range of 1 to 20 MW, in particular in the range of 3 to 10 MW. The described electrolysis arrangement is preferably used for industrial scale electrolysis. In particular, this is to be understood in contrast to experimental setups on a laboratory scale. The industrial scale can be quantified in terms of the maximum rated DC power consumption of the stacks. The maximum rated DC power consumption is what is commonly used to describe the electrolysis stacks. For example, a "5 MW stack" has a maximum rated DC power consumption of 5 MW.

The electrolysis arrangement further comprises an anode separator and a cathode separator. The following description applies to both the anode separator and the cathode separator. The separators are configured for separating the electrolysis products from the medium. If a mixture of the product and the medium is provided to the separator, the mixture is separated within the separator such that only the medium is provided at a separator medium outlet and only the product is provided at a separator product outlet. The medium is preferably liquid, while the products are preferably gaseous. The separators are hence preferably configured as gas/liquid separators. The anode separator and the cathode separator are preferably not connected to each other except for indirect connections via the separator outlets and/or via the separator inlets. The separators are connected to all stacks. That is, all stacks share the same anode separator and the same cathode separator. This does not preclude the electrolysis arrangement from comprising further stacks connected to a further anode separator and a further cathode separator.

The electrolysis arrangement further comprises at least two transformers and at least two rectifiers that are configured for providing electrical energy to the stacks. It is preferred that each of the stacks has a respective transformer and a respective rectifier. That is, there is one transformer and one rectifier per stack. However, it is also possible that a transformer and a rectifier are connected to more than one stack. For example, a pair of a transformer and a rectifier can be connected to two or four of the stacks. It is preferred that the transformers and rectifiers are arranged in pairs that each form a respective unit. The transformers and rectifiers of a unit are preferably arranged within a common housing.

The medium is driven by at least one pump unit. The at least one pump unit preferably has a variable flow. That is, the flow of the medium generated by the pump unit can be controlled, for example, by controlling the rotation speed of at least one pump of the pump unit. In case there are multiple pump units, it is preferred that the flows of the medium generated by the pump units can be controlled independently of each other. Preferably, the pump unit is connected to the stacks via a header for separating the medium provided by the pump unit into a respective flow for each of the stacks.

The electrolysis arrangement comprises an enclosure. The enclosure is preferably a building. The enclosure can be obtained by building a new building or can be obtained by refurbishing an existing building. The enclosure has a base plate, a roof and walls that enclose a space. The enclosure has a primary level and a secondary level, which is elevated with respect to the primary level. The primary level is preferably a ground level of the enclosure. Instead of the term "level" also the term "story" could be used, in particular in case the enclosure is a building. The term "level" is not to be understood as a level in a mathematical sense, but rather as a section of the enclosure that has a certain height. Preferably, each level has a respective height of 3 to 8 m. The term "primary level" is supposed to be understood in contrast to other levels such as the secondary level.

The electrolysis arrangement is described using a coordinate system having a first direction, a second direction and a third direction that are pairwise perpendicular to each other. The first direction and the second direction are defined by the floor of the primary level. The floor of the primary level is the bottom of the primary level. Preferably, the base plate of the enclosure forms the floor of the primary level.

The stacks, the pump unit, the transformers and preferably also the rectifiers and the header are arranged on the primary level of the enclosure. That is, the stacks, the pump unit, the transformers and preferably also the rectifiers are arranged within the enclosure since the primary level is defined only within the enclosure. The fact that the header is arranged on the primary level does not mean that the header has to be arranged at the bottom of the primary level. It is possible for the header to be arranged at any height that falls within the primary level. The header is preferably attached to pylons of the enclosure.

The separators are arranged on the secondary level. Due to this arrangement it is possible to have an enclosure with a comparatively small footprint. Also, the arrangement of the separators on the secondary level reduces the lengths of conduits between the separators and the stacks.

The enclosure comprises three sections that are arranged next to each other along the first direction. That is, the three sections are arranged in a row along the first direction. Preferably, the three sections are arranged adjacent to each other. That means that there is no space in between neighboring sections. The sections are defined in terms of which elements of the electrolysis arrangement are arranged in a certain section. That is, it is not necessary that the boundary between two neighboring sections is visible in terms of a structural feature. A first section comprises at least one of the stacks, at least one of the transformers and, preferably, also at least one of the rectifiers. Conveniently, the at least one stack of the first section is connected to a transformer and a rectifier of the first section. A second section comprises the pump unit, the heat exchanger for temperature control of medium, the anode separator and the cathode separator. A third section comprises at least one of the stacks, at least one of the transformers and, preferably, also at least one of the rectifiers. Conveniently, the at least one stack of the third section is connected to a transformer and a rectifier of the third section. For example, two stacks can be arranged within the first section and two further stacks can be arranged within the third section.

Having the stacks arranged on both sides of the separators reduces the distance from the stacks to the separators. Also, it is sufficient to have a second level only in the middle of the enclosure when viewed along the first direction. This reduces the volume that is supposed to be air-conditioned and facilitates the design of the enclosure since the space under a gable roof can be used as the secondary level. To this end it should be noted that the secondary level of the enclosure can have different heights in different positions, which is the case if the space under a gable roof is used as a secondary level. Herein, the term "air-conditioning" is supposed to mean that the climate is controlled. This can include heating and/or cooling.

Due to the described configuration the electrolysis arrangement has a particularly small footprint. Thereby, the electrolysis arrangement is particularly suitable for brownfield sites. Brownfield sites are those that are already built upon, and often are space constrained.

Preferably, the stacks, the transformers, the rectifiers, the anode separator and the cathode separator are configured in a modular manner. That means that the stacks, the transformers, the rectifiers and the separators form respective modules. The modules can be arranged in various ways. Thereby, the layout of the electrolysis arrangement can easily be adapted to boundary conditions such as available space. Also, the layout of the electrolysis arrangement can be changed particularly easily, for example if further stacks are supposed to be added to an existing electrolysis arrangement.

According to a preferred embodiment of the electrolysis arrangement each of the stacks is arranged perpendicular to the separators.

A stack is oriented perpendicularly to a separator if an axis of the stack and an axis of the separator are perpendicular to each other. In this embodiment the distance between the stacks and the separators can be uniform.

According to a further preferred embodiment of the electrolysis arrangement in the first section at least one stack is arranged ahead of the at least one transformer when viewed along the second direction, wherein in the third section the at least one stack is arranged behind the at least one transformer when viewed along the second direction.

In the first section at least one stack is arranged at a position that is ahead of where the at least one transformer of the first section and, preferably also the at least one rectifier of the first section are arranged. That means that when the electrolysis arrangement is passed along the second direction, the transformer and, preferably, also the rectifier are passed before the corresponding stack is passed. The arrangement in the third section is inverted compared to the arrangement in the first section. This was found to facilitate maintenance because the transformer and rectifiers can be moved out of the enclosure on opposite sides.

In the case that for each of the stacks a respective transformer and a respective rectifier are provided, if it preferred that in the first section the stacks are arranged ahead of the respective transformer and rectifier when viewed along the second direction and that in the third section the stacks are arranged behind the respective transformer and rectifier when viewed along the second direction.

According to a further preferred embodiment the electrolysis arrangement further comprises at least one filter for filtering the medium and/or at least one heat exchange unit for controlling a temperature of the medium. The "and" case is preferred. In that case both the filter and the heat exchange unit are arranged within the second section. In case the electrolysis arrangement comprises the filter, but not the heat exchange unit, the filter is arranged within the second section. In case the electrolysis arrangement comprises the heat exchange unit, but not the filter, the heat exchange unit is arranged within the second section. The filter is used to remove undesired substances from the medium.

Placing the filter and/or the heat exchange unit and the cathode separator outside the first and third sections reduces the size of ATEX zones and the volume that is supposed to be air-conditioned. Nevertheless, the separators, in particular the cathode separator, can be subjected to ventilation, in particular to natural ventilation. Having the filter and/or the heat exchange unit arranged outside the first and third sections also facilitates maintenance in that an operator does not have to enter an ATEX zone in order to access the filter and/or the heat exchange unit. Also, the distance from the stacks to the filter and/or the heat exchange unit can be particularly short with the filter and/or the heat exchange unit being arranged in between the sections comprising the stacks. This also contributes to having uniform pipe lengths and a small footprint of the enclosure.

Preferably, the filter and/or the heat exchange unit are arranged on the primary level of the enclosure. The heat exchange unit is preferably a cooler.

According to a further preferred embodiment of the electrolysis arrangement an axis of the anode separator and/or an axis of the cathode separator are oriented along the second direction. The "and" case is preferred.

It was found that the footprint of the enclosure can be reduced by arranging the separators according to the present embodiment.

In this embodiment the separators can be arranged in the space under the roof, in particular in the case of a gable roof. This is particularly the case if a ridge of the roof is oriented parallel to the second direction.

According to a further preferred embodiment the electrolysis arrangement further comprises for each of the stacks a respective electrical switchgear unit and/or a respective PLC unit arranged on the primary level next to the respective transformer when viewed in the first direction. The "and" case is preferred.

Having the electrical switchgear units and the PLC units arranged on the primary level allows the secondary level to be particularly small. In particular, it is possible to have only the separators arranged on the secondary level. In that case the separators can be arranged in the space under the roof, in particular in the case of a gable roof.

According to a further preferred embodiment the electrolysis arrangement further comprises at least one electrical switchgear unit and/or at least one PLC unit arranged on a secondary level of the enclosure. The "and" case is preferred.

It is preferred that each of the stacks has a respective electrical switchgear unit and a respective PLC unit. That is, there is one electrical switchgear unit and one rectifier per stack. However, it is also possible that an electrical switchgear unit and/or a PLC unit are connected to more than one stack. For example, a pair of an electrical switchgear unit and a PLC unit can be connected to two or four of the stacks. It is preferred that the electrical switchgear units and PLC units are arranged in pairs that each form a respective unit.

In the present embodiment the at least one electrical switchgear unit and/or the at least one PLC unit are preferably arranged not directly above the stacks and not directly above the transformer(s) and rectifier(s).

The at least one electrical switchgear unit and the at least one PLC unit can be lighter than the transformer(s) and rectifier(s). Hence, it was found that the at least one electrical switchgear unit and the at least one PLC unit can be placed on the secondary level. This reduces the footprint of the electrolysis arrangement, while still allowing short distances between the elements of the electrolysis arrangement.

According to a further preferred embodiment of the electrolysis arrangement the electrolysis cells are configured as PEM electrolysis cells, anion exchange membrane electrolysis cells or alkaline electrolysis cells.

It was found that in particular using these electrolysis cells the described advantages can be obtained. PEM electrolysis cells are particularly preferred. In this case as well as in the case of anion exchange membrane electrolysis cells the medium is water, in particular de-ionised water. In case of alkaline electrolysis cells the medium is an aqueous solution of potassium hydroxide (KOH). Anion exchange membrane electrolysers can also operate in a medium of mild caustic solutions, nominally of KOH solution.

According to a further preferred embodiment of the electrolysis arrangement the first section and the third section are configured symmetrically to each other.

This was found to facilitate maintenance because the transformer and rectifiers can be moved out of the enclosure on opposite sides and the stacks can be moved out of the enclosure on opposite sides.

According to a further preferred embodiment of the electrolysis arrangement axes of the stacks are oriented along the second direction.

In this embodiment the distance between the stacks and the respective transformer and, preferably, also the respective rectifier can be particularly uniform.

According to a further preferred embodiment of the electrolysis arrangement the transformers, the rectifiers and/or the stacks can be moved out of the enclosure parallel to the second direction.

In this embodiment the transformers and the rectifiers do not interfere with maintenance of the stacks. Preferably, the stacks can be moved out of the enclosure on rails.

According to a further preferred embodiment of the electrolysis arrangement axes of the stacks are oriented along the first direction.

In this embodiment the distance between the stacks and the separators can be particularly uniform.

According to a further preferred embodiment of the electrolysis arrangement the stacks can be moved out of the enclosure parallel to the first direction and/or the transformers and the rectifiers can be moved out of the enclosure parallel to the second direction. The "and" case is preferred.

This embodiment is particularly preferred in case the axes of the stacks are oriented along the first direction. That way, each stack can be moved out of the enclosure independently of the other elements. Preferably, the stacks, the transformers and/or the rectifiers can be moved out of the enclosure on respective rails.

According to a further preferred embodiment of the electrolysis arrangement further comprises a ventilation installation arranged above the second section.

The ventilation installation can be used to air-condition at least a part of the enclosure. Therefore, a ventilation flow is generated by the ventilation installation. The ventilation flow is preferably a flow of a gas, in particular of air. The ventilation installation is preferably configured for adjusting the temperature of the ventilation flow to a set value.

In the following the invention will be described with respect to the figures. The figures show preferred embodiments, to which the invention is not limited. The figures and the dimensions shown therein are only schematic. The figures show:
- Fig. 1:: a circuit layout of an electrolysis arrangement according to the invention,
- Fig. 2:: a side view of a first embodiment of an electrolysis arrangement according to Fig. 1,
- Fig. 3:: a top view of the electrolysis arrangement of Fig. 2,
- Fig. 4:: a side view of a second embodiment of an electrolysis arrangement according to Fig. 1, and
- Fig. 5:: a top view of the electrolysis arrangement of Fig. 4.

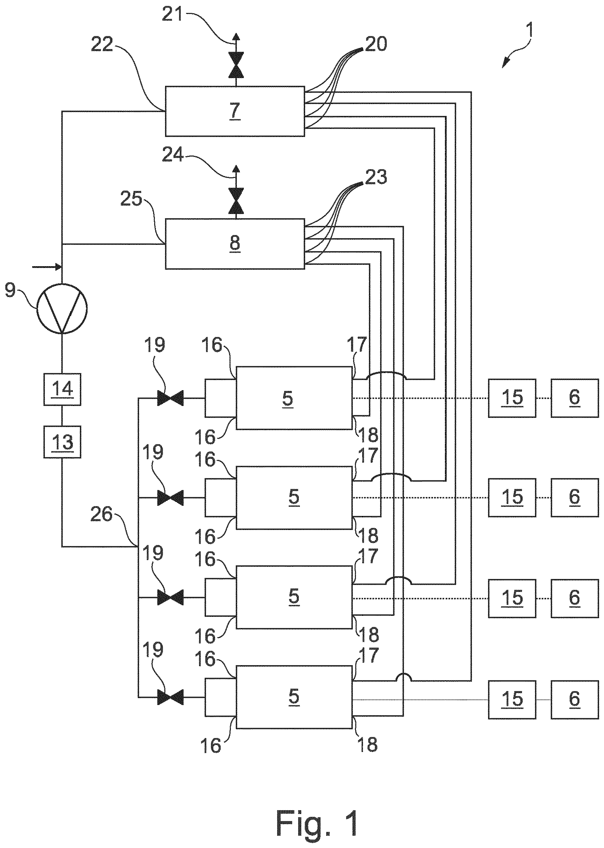

Fig. 1 shows an electrolysis arrangement 1 that comprises multiple stacks 5 of electrolysis cells. The electrolysis cells may be configured as PEM electrolysis cells, anion exchange membrane electrolysis cells or alkaline electrolysis cells. The stacks 5 each have a maximum rated DC power consumption in the range of 1 to 20 MW. Each of the stacks 5 is connected to a respective rectifier 15 and a respective transformer 6. Also, the electrolysis arrangement 1 comprises a pump unit 9 for driving a medium. The pump unit 9 comprises a centrifugal pump configured to provide an adjustable flow of the medium. Each stack 5 comprises two stack inlets 16 that are connected to the pump unit 9 via a header 26 for separating a flow of the medium provided by the pump unit 9 into a respective flow for each of the stacks 5. Between the pump unit 9 and the header 26 a heat exchange unit 14 and a filter 13 are arranged. Further, each stack 5 comprises a respective anode outlet 17 and a respective cathode outlet 18. The stacks 5 are configured to obtain by electrolysis of the medium introduced into the respective stack inlets 16 an anode product provided together with the medium at the respective anode outlet 17 and a cathode product provided together with the medium at the respective cathode outlet 18.

Further, the electrolysis arrangement 1 comprises a respective control valve 19 for each of the stacks 5 arranged between the header 26 and the respective stack inlets 16, wherein the control valves 19 are configured to individually control a flow of the medium into the respective stack 5.

The electrolysis arrangement 1 further comprises an anode separator 7 having an anode separator medium outlet 22 that is connected to the pump unit 9. Each of the anode outlets 17 of the stacks 5 is connected to a respective anode separator inlet 20 of the anode separator 7. The anode separator 7 is configured to separate the anode product from the medium introduced into the anode separator inlets 20 such that the anode product is provided at an anode separator product outlet 21 and the medium is provided at the anode separator medium outlet 22. The electrolysis arrangement 1 further comprises a cathode separator 8 having a cathode separator medium outlet 25 that is connected to the pump unit 9. Each of the cathode outlets 18 of the stacks 5 is connected to a respective cathode separator inlet 23 of the cathode separator 8. The cathode separator 8 is configured to separate the cathode product from the medium introduced into the cathode separator inlets 23 such that the cathode product is provided at a cathode separator product outlet 24 and the medium is provided at the cathode separator medium outlet 25.

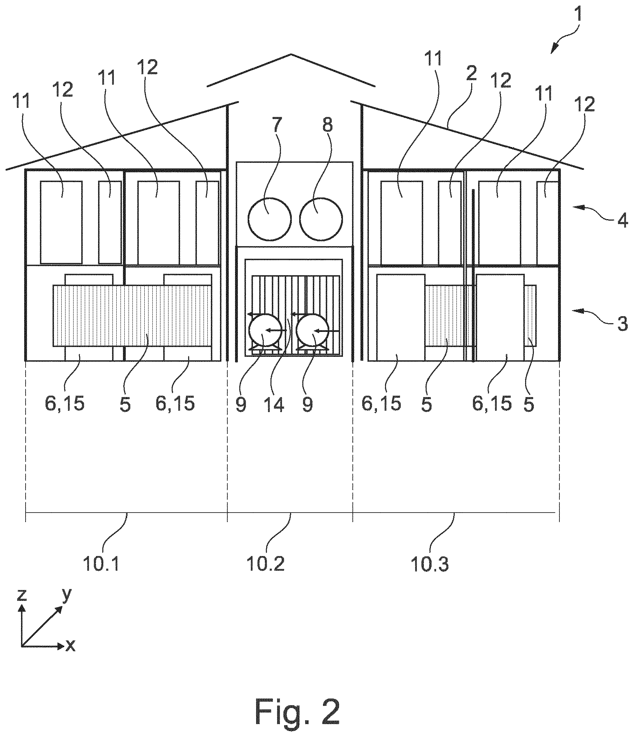

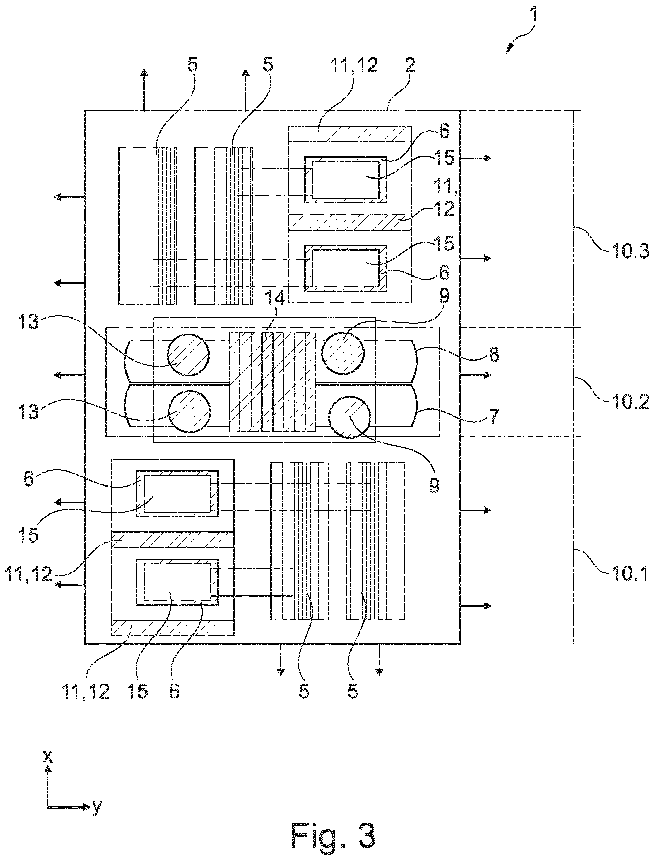

Fig. 2 and 3 show a first embodiment of an electrolysis arrangement 1 according to Fig. 1. The electrolysis arrangement 1 comprises an enclosure 2 having a primary level 3 with a floor spanned by a first direction x and a second direction y that is perpendicular to the first direction x. The second direction y is oriented perpendicularly to the drawing plane. Also, a third direction z is indicated, wherein the first direction x, the second direction y and the third direction z are pairwise perpendicular to each other.

The electrolysis arrangement 1 comprises (in contrast to the simplified schematic of Fig. 1) two pump units 9 and two filters 13. The heat exchange unit 14 is configured as a gasket heat exchanger.

The enclosure 2 has a primary level 3 and a secondary level 4, which is elevated with respect to the primary level 3. Further, the enclosure 2 comprises three sections 10.1,10.2,10.3 that are arranged next to each other along the first direction x. Two of the stacks 5 and the respective transformers 6 and rectifiers 15 are arranged within a first 10.1 of the sections, the pump units 9, the anode separator 7, the cathode separator 8, the filter 13 and the heat exchange unit 14 are arranged within a second 10.2 of the sections and two further of the stacks 5 and the respective transformers 6 and rectifiers 15 are arranged within a third 10.3 of the sections. The first section 10.1 and the third section 10.3 are configured symmetrically to each other. In the embodiment of Fig. 2 and 3 this symmetry is a point symmetry.

As can be seen from Fig. 3, each of the stacks 5 is arranged perpendicular to the separators 7,8. Axis of the stacks 5 are oriented along the first direction x. An axis of the anode separator 7 and an axis of the cathode separator 8 are oriented along the second direction y. In the first section 10.1 the stacks 5 are arranged ahead of the respective transformer 6 when viewed along the second direction y (that is in the view of Fig. 3 the stacks 5 are arranged right of the transformers 6). In the third section 10.3 the stacks 5 are arranged behind the respective transformer 6 when viewed along the second direction y (that is in the view of Fig. 3 the stacks 5 are arranged left of the transformers 6).

The electrolysis arrangement 1 further comprises for each of the stacks 5 a respective electrical switchgear unit 11 and a respective PLC unit 12 arranged on the secondary level 4 of the enclosure 2.

As indicated by arrows in Fig. 3, the stacks 5 can be moved out of the enclosure 2 parallel to the first direction x and the transformers 6 and the rectifiers 15 can be moved out of the enclosure 2 parallel to the second direction y. Alternatively, the stacks 5 can also be moved out of the enclosure 2 parallel to the second direction y.

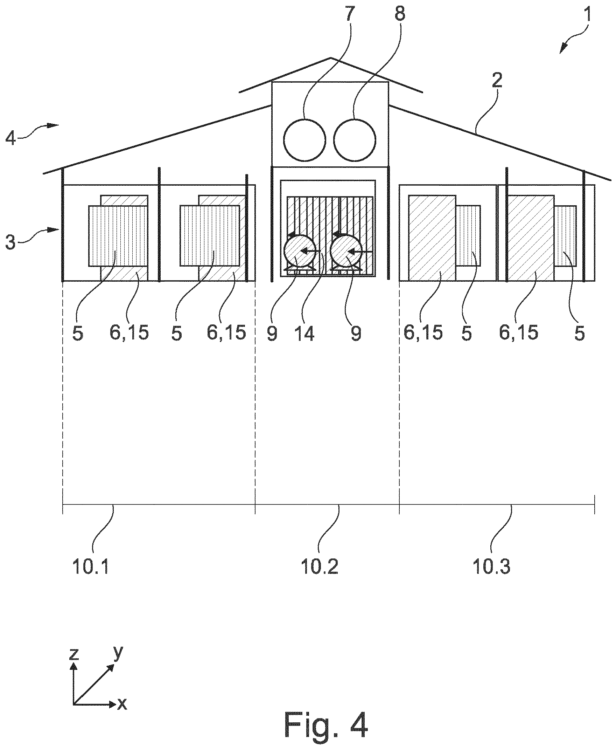

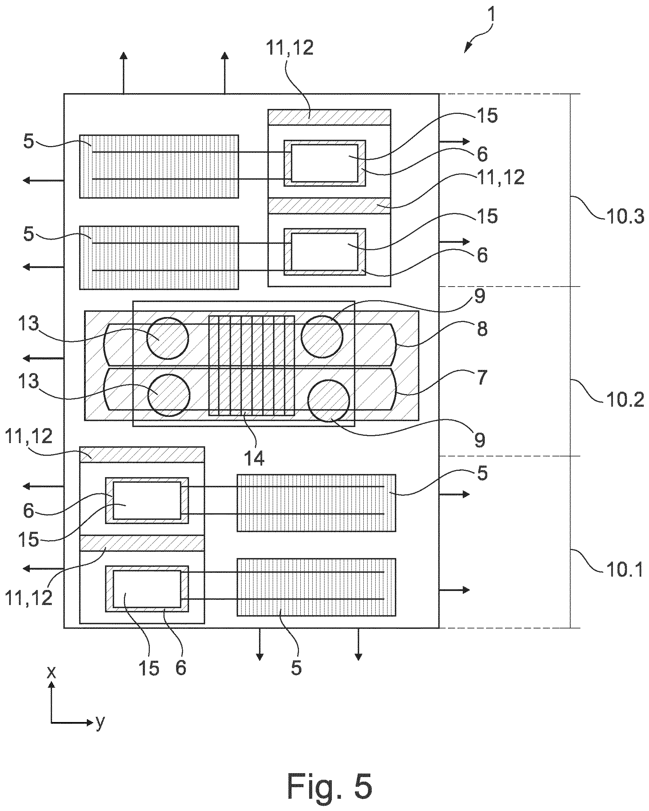

Fig. 4 and 5 show a second embodiment of an electrolysis arrangement 1 according to Fig. 1. Although the embodiments shown in Fig. 2 and 3 as well as in Fig. 4 and 5 are different, both embodiments are realizations of what is shown schematically in Fig 1. This is possible because Fig. 1 is a schematic circuit layout only.

In contrast to the embodiment of Fig. 2 and 3, the stack 5 and the separators 7,8 of the embodiment of Fig. 4 and 5 are oriented parallel to each other. In particular, axes of the stacks 5 and axes of the separators 7,8 are oriented along the second direction y. This, however, results in non-uniform pipe lengths from the stacks 5 to the separators 7,8. Therefore, the embodiment of Fig. 2 and 3 is preferred over the embodiment of Fig. 4 and 5. Nevertheless, the embodiment of Fig. 4 and 5 is possible and still preferred over prior art solutions.

Further, in the embodiment according to Fig. 4 and 5 only the separators 7,8 are arranged on the secondary level 4. The electrical switchgear units 11 and the PLC units 12 are arranged on the primary level 3 next to the respective transformer 6 when viewed in the first direction x. That is, in the view of Fig. 5 the switchgear units 11 and the PLC units 12 are arranged above or below the respective transformer 6. As indicated by arrows in Fig. 5, the stacks 5, the transformers 6 and the rectifiers 15 can be moved out of the enclosure 2 parallel to the second direction y.

The electrolysis arrangement 1 has a layout with a particularly small footprint, particularly short bus lengths, a particularly small volume that is supposed to be air-conditioned and particularly small ATEX zones. Thereby, the electrolysis arrangement 1 allows cost efficient construction and energy efficient operation.

### List of reference numerals

- 1: electrolysis arrangement
- 2: enclosure
- 3: primary level
- 4: secondary level
- 5: stack
- 6: transformer
- 7: anode separator
- 8: cathode separator
- 9: pump unit
- 10.1: first section
- 10.2: second section
- 10.3: third section
- 11: electrical switchgear unit
- 12: PLC unit
- 13: filter
- 14: heat exchange unit
- 15: rectifier
- 16: stack inlet
- 17: anode outlet
- 18: cathode outlet
- 19: control valve
- 20: anode separator inlet
- 21: anode separator product outlet
- 22: anode separator medium outlet
- 23: cathode separator inlet
- 24: cathode separator product outlet
- 25: cathode separator medium outlet
- 26: header
- x: first direction
- y: second direction
- z: third direction

## Claims

1. Electrolysis arrangement (1) comprising:
- an enclosure (2) having a primary level (3) with a floor spanned by a first direction (x) and a second direction (y) that is perpendicular to the first direction (x),
- multiple stacks (5) of electrolysis cells, wherein the stacks (5) are configured to obtain an anode product and a cathode product by electrolysis of a medium, and wherein the stacks (5) are arranged on the primary level (3) of the enclosure (2),
- at least two transformers (6) and at least two rectifiers (15) configured to provide electrical energy to the stacks (5), wherein the transformers (6) are arranged on the primary level (3) of the enclosure (2),
- an anode separator (7) connected to the stacks (5) and configured to separate the anode product from the medium, wherein the anode separator (7) is arranged on a secondary level (4) of the enclosure (2), wherein the secondary level (4) is elevated with respect to the primary level (3),
- a cathode separator (8) connected to the stacks (5) and configured to separate the cathode product from the medium, wherein the cathode separator (8) is arranged on the secondary level (4) of the enclosure (2), and
- a pump unit (9) for driving the medium, wherein the pump unit (9) is arranged on the primary level (3) of the enclosure (2),
wherein the enclosure (2) comprises three sections (10.1, 10.2,10.3) that are arranged next to each other along the first direction (x), wherein at least one of the stacks (5) and at least one of the transformers (6) are arranged within a first (10.1) of the sections, wherein the pump unit (9), the anode separator (7) and the cathode separator (8) are arranged within a second (10.2) of the sections, and wherein at least one of the stacks (5) and at least one of the transformers (6) are arranged within a third (10.3) of the sections.

2. Electrolysis arrangement (1) according to claim 1, wherein each of the stacks (5) is arranged perpendicular to the separators (7, 8), wherein an axis of the stacks (5) is oriented along the first direction (x), and an axis of the anode separator (7) and an axis of the cathode separator (8) are oriented along the second direction (y).

3. Electrolysis arrangement (1) according to any of the preceding claims, wherein in the first section (10.1) the at least one stack (5) is arranged ahead of the at least one transformer (6) when viewed along the second direction (y), and wherein in the third section (10.3) the at least one stack (5) is arranged behind the at least one transformer (6) when viewed along the second direction (y).

4. Electrolysis arrangement (1) according to any of the preceding claims, further comprising at least one filter (13) for filtering the medium and/or at least one heat exchange unit (14) for controlling a temperature of the medium, wherein the filter (13) and/or the heat exchange unit (14) are arranged within the second section (10.2).

5. Electrolysis arrangement (1) according to any of the preceding claims, wherein an axis of the anode separator (7) and/or an axis of the cathode separator (8) are oriented along the second direction (y).

6. Electrolysis arrangement (1) according to any of the preceding claims, further comprising for each of the stacks (5) a respective electrical switchgear unit (11) and/or a respective PLC unit (12) arranged on the primary level (3) next to the respective transformer (6) when viewed in the first direction (x).

7. Electrolysis arrangement (1) according to any one of claims 1 to 6, further comprising at least one electrical switchgear unit (11) and/or at least one PLC unit (12) arranged on the secondary level (4) of the enclosure (2).

8. Electrolysis arrangement (1) according to any of the preceding claims, wherein the electrolysis cells are configured as PEM electrolysis cells, anion exchange membrane electrolysis cells or alkaline electrolysis cells.

9. Electrolysis arrangement (1) according to any of the preceding claims, wherein the first section (10.1) and the third section (10.3) are configured symmetrically to each other.

10. Electrolysis arrangement (1) according to any of the preceding claims, wherein axes of the stacks (5) are oriented along the second direction (y).

11. Electrolysis arrangement (1) according to any of the preceding claims, wherein the transformers (6), the rectifiers (15) and/or the stacks (5) are so arranged in the enclosure (2) that they can be moved out of the enclosure (2) parallel to the second direction (y).

12. Electrolysis arrangement (1) according to any of the preceding claims, wherein axes of the stacks (5) are oriented along the first direction (x).

13. Electrolysis arrangement (1) according to any of the preceding claims, wherein the stacks (5) can be moved out of the enclosure (2) parallel to the first direction (x) and/or the transformers (6) and the rectifiers (15) are so arranged in the enclosure (2) that they can be moved out of the enclosure (2) parallel to the second direction (y).

14. Electrolysis arrangement (1) according to any of the preceding claims, further comprising a ventilation installation arranged above the second section (10.2).

## Patentansprüche

1. Elektrolyseanordnung (1), umfassend:
- ein Gehäuse (2) mit einer primären Ebene (3) mit einem Boden, der von einer ersten Richtung (x) und einer zweiten Richtung (y), die rechtwinklig zu der ersten Richtung (x) ist, aufgespannt ist,
- mehrere Stapel (5) von Elektrolysezellen, wobei die Stapel (5) dafür ausgelegt sind, ein Anodenprodukt und ein Kathodenprodukt durch Elektrolyse eines Mediums zu erhalten, und wobei die Stapel (5) auf der primären Ebene (3) des Gehäuses (2) angeordnet sind,
- wenigstens zwei Transformatoren (6) und wenigstens zwei Gleichrichter (15), die dafür ausgelegt sind, den Stapeln (5) elektrische Energie zuzuführen, wobei die Transformatoren (6) auf der primären Ebene (3) des Gehäuses (2) angeordnet sind,
- einen Anodenseparator (7), der mit den Stapeln (5) verbunden und dafür ausgelegt ist, das Anodenprodukt von dem Medium zu trennen, wobei der Anodenseparator (7) auf einer sekundären Ebene (4) des Gehäuses (2) angeordnet ist, wobei die sekundäre Ebene (4) in Bezug auf die primäre Ebene (3) erhöht ist,
- einen Kathodenseparator (8), der mit den Stapeln (5) verbunden und dafür ausgelegt ist, das Kathodenprodukt vom Medium zu trennen, wobei der Kathodenseparator (8) auf der sekundären Ebene (4) des Gehäuses (2) angeordnet ist, und
- eine Pumpeneinheit (9) zum Fördern des Mediums, wobei die Pumpeneinheit (9) auf der primären Ebene (3) des Gehäuses (2) angeordnet ist,
wobei das Gehäuse (2) drei Sektionen (10.1, 10.2, 10.3) aufweist, die nebeneinander entlang der ersten Richtung (x) angeordnet sind, wobei wenigstens einer der Stapel (5) und wenigstens einer der Transformatoren (6) innerhalb einer ersten (10.1) der Sektionen angeordnet sind, wobei die Pumpeneinheit (9), der Anodenseparator (7) und der Kathodenseparator (8) innerhalb einer zweiten (10.2) der Sektionen angeordnet sind und wobei wenigstens einer der Stapel (5) und wenigstens einer der Transformatoren (6) innerhalb einer dritten (10.3) der Sektionen angeordnet sind.

2. Elektrolyseanordnung (1) nach Anspruch 1, wobei jeder der Stapel (5) rechtwinklig zu den Separatoren (7, 8) angeordnet ist, wobei eine Achse der Stapel (5) entlang der ersten Richtung (x) ausgerichtet ist und eine Achse des Anodenseparators (7) und eine Achse des Kathodenseparators (8) entlang der zweiten Richtung (y) ausgerichtet sind.

3. Elektrolyseanordnung (1) nach einem der vorstehenden Ansprüche, wobei in der ersten Sektion (10.1) der wenigstens eine Stapel (5) in der zweiten Richtung (y) gesehen vor dem wenigstens einen Transformator (6) angeordnet ist und wobei in der dritten Sektion (10.3) der wenigstens eine Stapel (5) in der zweiten Richtung (y) gesehen hinter dem wenigstens einen Transformator (6) angeordnet ist.

4. Elektrolyseanordnung (1) nach einem der vorstehenden Ansprüche, ferner wenigstens einen Filter (13) zum Filtern des Mediums und/oder wenigstens eine Wärmetauschereinheit (14) zum Regeln einer Temperatur des Mediums umfassend, wobei der Filter (13) und/oder die Wärmetauschereinheit (14) innerhalb der zweiten Sektion (10.2) angeordnet ist/sind.

5. Elektrolyseanordnung (1) nach einem der vorstehenden Ansprüche, wobei eine Achse des Anodenseparators (7) und/oder eine Achse des Kathodenseparators (8) entlang der zweiten Richtung (y) ausgerichtet ist/sind.

6. Elektrolyseanordnung (1) nach einem der vorstehenden Ansprüche, ferner für jeden der Stapel (5) eine jeweilige elektrische Schalteinheit (11) und/oder eine jeweilige PLC-Einheit (12) umfassend, die auf der primären Ebene (3) in der ersten Richtung (x) gesehen neben dem jeweiligen Transformator (6) angeordnet ist/sind.

7. Elektrolyseanordnung (1) nach einem der Ansprüche 1 bis 6, ferner wenigstens eine elektrischen Schalteinheit (11) und/oder wenigstens eine PLC-Einheit (12) umfassend, die auf der sekundären Ebene (4) des Gehäuses (2) angeordnet ist/sind.

8. Elektrolyseanordnung (1) nach einem der vorstehenden Ansprüche, wobei die Elektrolysezellen als PEM-Elektrolysezellen, Anionenaustauschmembran-Elektrolysezellen oder Alkali-Elektrolysezellen ausgestaltet sind.

9. Elektrolyseanordnung (1) nach einem der vorstehenden Ansprüche, wobei die erste Sektion (10.1) und die dritte Sektion (10.3) symmetrisch zueinander ausgestaltet sind.

10. Elektrolyseanordnung (1) nach einem der vorstehenden Ansprüche, wobei Achsen der Stapel (5) entlang der zweiten Richtung (y) ausgerichtet sind.

11. Elektrolyseanordnung (1) nach einem der vorstehenden Ansprüche, wobei die Transformatoren (6), die Gleichrichter (15) und/oder die Stapel (5) derart im Gehäuse (2) angeordnet sind, dass sie parallel zur zweiten Richtung (y) aus dem Gehäuse (2) heraus verschoben werden können.

12. Elektrolyseanordnung (1) nach einem der vorstehenden Ansprüche, wobei Achsen der Stapel (5) entlang der ersten Richtung (x) ausgerichtet sind.

13. Elektrolyseanordnung (1) nach einem der vorstehenden Ansprüche, wobei die Stapel (5) parallel zur ersten Richtung (x) aus dem Gehäuse (2) heraus verschoben werden können und/oder die Transformatoren (6) und die Gleichrichter (15) derart im Gehäuse (2) angeordnet sind, dass sie parallel zur zweiten Richtung (y) aus dem Gehäuse (2) heraus verschoben werden können.

14. Elektrolyseanordnung (1) nach einem der vorstehenden Ansprüche, ferner eine Lüftungsinstallation umfassend, die oberhalb der zweiten Sektion (10.2) angeordnet ist.

## Revendications

1. Agencement d'électrolyse (1) comprenant :
- une enceinte (2) ayant un niveau principal (3) avec un plancher s'étendant dans une première direction (x) et une deuxième direction (y) qui est perpendiculaire à la première direction (x),
- de multiples empilements (5) de cellules d'électrolyse, les empilements (5) étant conçus pour obtenir un produit anodique et un produit cathodique par électrolyse d'un milieu, et les empilements (5) étant disposés sur le niveau principal (3) de l'enceinte (2),
- au moins deux transformateurs (6) et au moins deux redresseurs (15) conçus pour fournir de l'énergie électrique aux empilements (5), les transformateurs (6) étant disposés sur le niveau principal (3) de l'enceinte (2),
- un séparateur anodique (7) relié aux empilements (5) et conçu pour séparer le produit anodique du milieu, le séparateur anodique (7) étant disposé sur un niveau secondaire (4) de l'enceinte (2), le niveau secondaire (4) étant élevé par rapport au niveau principal (3),
- un séparateur cathodique (8) relié aux empilements (5) et conçu pour séparer le produit cathodique du milieu, le séparateur cathodique (8) étant disposé sur le niveau secondaire (4) de l'enceinte (2), et
- une unité de pompage (9) pour entraîner le milieu, l'unité de pompage (9) étant disposée sur le niveau principal (3) de l'enceinte (2),
dans lequel l'enceinte (2) comprend trois sections (10.1, 10.2, 10.3) qui sont disposées les unes à côté des autres le long de la première direction (x), dans lequel au moins un des empilements (5) et au moins un des transformateurs (6) sont disposés à l'intérieur d'une première (10.1) des sections, dans lequel l'unité de pompage (9), le séparateur anodique (7) et le séparateur cathodique (8) sont disposés à l'intérieur d'une deuxième (10.2) des sections, et dans lequel au moins un des empilements (5) et au moins un des transformateurs (6) sont disposés à l'intérieur d'une troisième (10.3) des sections.

2. Agencement d'électrolyse (1) selon la revendication 1, dans lequel chacun des empilements (5) est disposé perpendiculairement aux séparateurs (7, 8), dans lequel un axe des empilements (5) est orienté le long de la première direction (x), et un axe du séparateur anodique (7) et un axe du séparateur cathodique (8) sont orientés le long de la deuxième direction (y).

3. Agencement d'électrolyse (1) selon l'une quelconque des revendications précédentes dans lequel, dans la première section (10.1), l'au moins un empilement (5) est disposé devant l'au moins un transformateur (6) lorsqu'on regarde le long de la deuxième direction (y), et dans lequel, dans la troisième section (10.3), l'au moins un empilement (5) est disposé derrière l'au moins un transformateur (6) lorsqu'on regarde le long de la deuxième direction (y).

4. Agencement d'électrolyse (1) selon l'une quelconque des revendications précédentes, comprenant en outre au moins un filtre (13) pour filtrer le milieu et/ou au moins une unité d'échange de chaleur (14) pour réguler une température du milieu, dans lequel le filtre (13) et/ou l'unité d'échange de chaleur (14) sont disposés à l'intérieur de la deuxième section (10.2).

5. Agencement d'électrolyse (1) selon l'une quelconque des revendications précédentes, dans lequel un axe du séparateur anodique (7) et/ou un axe du séparateur cathodique (8) sont orientés le long de la deuxième direction (y).

6. Agencement d'électrolyse (1) selon l'une quelconque des revendications précédentes, comprenant en outre, pour chacun des empilements (5), une unité de commutation électrique respective (11) et/ou une unité PLC respective (12) disposées sur le niveau principal (3) à côté du transformateur respectif (6) lorsqu'on regarde dans la première direction (x).

7. Agencement d'électrolyse (1) selon l'une quelconque des revendications 1 à 6, comprenant en outre au moins une unité de commutation électrique (11) et/ou au moins une unité PLC (12) disposées sur le niveau secondaire (4) de l'enceinte (2).

8. Agencement d'électrolyse (1) selon l'une quelconque des revendications précédentes, dans lequel les cellules d'électrolyse sont conçues comme des cellules d'électrolyse PEM, des cellules d'électrolyse à membrane échangeuse d'anions ou des cellules d'électrolyse alcaline.

9. Agencement d'électrolyse (1) selon l'une quelconque des revendications précédentes, dans lequel la première section (10.1) et la troisième section (10.3) sont conçues symétriquement l'une par rapport à l'autre.

10. Agencement d'électrolyse (1) selon l'une quelconque des revendications précédentes, dans lequel des axes des empilements (5) sont orientés le long de la deuxième direction (y).

11. Agencement d'électrolyse (1) selon l'une quelconque des revendications précédentes, dans lequel les transformateurs (6), les redresseurs (15) et/ou les empilements (5) sont disposés de telle sorte dans l'enceinte (2) qu'ils peuvent être sortis de l'enceinte (2) parallèlement à la deuxième direction (y).

12. Agencement d'électrolyse (1) selon l'une quelconque des revendications précédentes, dans lequel des axes des empilements (5) sont orientés le long de la première direction (x).

13. Agencement d'électrolyse (1) selon l'une quelconque des revendications précédentes, dans lequel les empilements (5) peuvent être sortis de l'enceinte (2) parallèlement à la première direction (x) et/ou les transformateurs (6) et les redresseurs (15) sont disposés de telle sorte dans l'enceinte (2) qu'ils peuvent être sortis de l'enceinte (2) parallèlement à la deuxième direction (y).

14. Agencement d'électrolyse (1) selon l'une quelconque des revendications précédentes, comprenant en outre une installation de ventilation disposée au-dessus de la deuxième section (10.2).
